# EUROPÄISCHE PATENTSCHRIFT

(11) **EP 1 029 195 B1**
(45) Veröffentlichungstag und Bekanntmachung des Hinweises auf die Patenterteilung: **02.04.2003**
(21) Anmeldenummer: 98966155.8
(22) Anmeldetag: 12.11.1998
(51) Int. Cl.: F17C 1/00

(54) **COMPOSITE-DRUCKBEHÄLTER ZUR SPEICHERUNG VON GASFÖRMIGEN MEDIEN UNTER DRUCK MIT EINEM LINER AUS KUNSTSTOFF**
COMPOSITE PRESSURISED CONTAINER WITH A PLASTIC LINER FOR STORING GASEOUS MEDIA UNDER PRESSURE
RESERVOIR A PRESSION COMPOSITE MUNI D'UN REVETEMENT EN PLASTIQUE, SERVANT A STOCKER DES MILIEUX GAZEUX SOUS PRESSION

(30) Priorität: 14.11.1997 DE 19751411
(43) Veröffentlichungstag der Anmeldung: 23.08.2000
(73) Patentinhaber: mcs cylinder systems GmbH, 46535 Dinslaken (DE)
(72) Erfinder: RASCHE, Christian, Dr., D-44892 Bochum (DE); RAU, Steffen, Dr., D-40339 Düsseldorf (DE)
(74) Vertreter: Meissner, Peter E., Dipl.-Ing.
(86) Internationale Anmeldenummer: DE9803422
(87) Internationale Veröffentlichungsnummer: WO99027293

(56) Entgegenhaltungen:
- EP-A- 0 550 951
- EP-A- 0 753 700
- DE-C- 19 631 546
- FR-A- 2 744 517

## Beschreibung

Die Erfindung betrifft einen Composite-Druckbehälter zur Speicherung von gasförmigen Medien unter Druck mit einem Liner aus Kunststoff gemäß dem Oberbegriff des Patentanspruches 1.

Aus der EP 0 753 700 A1 ist ein gattungsbildender Composite-Druckbehälter bekannt. Er besteht aus einem Liner aus Kunststoff mit zwei im Halsbereich angeordneten Halsstücken sowie mit einer den Liner verstärkenden Wicklung eines Faserverbundwerkstoffes. Mindestens ein Halsstück ist so ausgebildet, daß es ein einschraubbares Ventil mit einem zylindrischen oder kegeligen Gewinde aufnehmen kann. Beide Halsstücke sind in dem den Druckbehälter zugewandten Endbereich mit einem flach verlaufenden kegelstumpfartigen Kragen versehen, der innenseitig vom Liner und außenseitig von der verstärkenden Wicklung umgeben ist. Beide Halsstücke weisen in dem dem Liner zugewandten Bereich einen Innengewindeabschnitt auf, der mit einem auf dem als Hals ausgebildeten Bereich des Liners angeordneten Außengewindeabschnitt zusammenwirkt. Das ein Ventil aufnehmende Halsstück weist in an den Innengewindeabschnitt anschließenden gewindefreien Bereich auf der Innenseite eine ringförmige Nut zur Aufnahme eines Dichtelementes auf. Daran schließt sich ein weiterer Innengewindeabschnitt zur Aufnahme des Ventils an. Zur Drehsicherung ist das das Ventil aufnehmende Halsstück außen mit einem Schlüsselansatz versehen.

Diese Konstruktion ist nur teilweise geeignet, die besonderen Anforderungen, die an Druckbehälter mit einem Fülldruck bis zu 300 bar gestellt werden, zu erfüllen. Dies gilt insbesondere für die Abdichtung im Halsbereich und für eine schlagartige Beanspruchung dieses Bereiches.

Aufgabe der Erfindung ist es, einen gattungsmäßigen Composite-Druckbehälter zur Speicherung von gasförmigen Medien unter Druck mit einem Liner aus Kunststoff anzugeben, der bei einem Prüfdruck von beispielsweise bis zu 450 bar die Zulassunganforderungen hinsichtlich Leckage auch nach schlagartiger Beanspruchung erfüllt.

Diese Aufgabe wird ausgehend vom Oberbegriff in Verbindung mit den kennzeichnenden Merkmalen des Anspruches 1 gelöst. Vorteilhafte Ausgestaltungen sind Bestandteil von Unteransprüchen.

Kern der Erfindung ist die gezielte Verbesserung der Abdichtung im kritischen Halsbereich. Dazu zählt die Anordnung eines einschraubbaren Klemmringes, dessen kegelstumpfartiger Abschnitt mit dem in das Halsstück hineinragenden Endbereich des Liners zusammenwirkt. Dieser Endbereich des Liners weist korrespondierend zum kegelstumpfartigen Abschnitt des Klemmringes vorzugsweise eine Schräge auf. Im Bedarfsfall kann dieser Abschnitt auch zylindrisch sein. Hergestellt wird der gesamte Abschnitt durch Aufbohren des das Ventil aufnehmenden Halses des Kunststoff-Liners. Im Anlieferungszustand weist dieser Hals im Regelfall nur ein kleines Entlüftungsloch auf, das bei der Herstellung des Liners offengehalten wird. Durch die Wahl des Winkels im Bereich zwischen 3 - 5° wird erreicht, daß die Einschraubkraft in einen sehr geringen axialen, dafür einen um so größeren radialen Anteil aufgeteilt wird. Dies hat zur Folge, daß der Endbereich des Liners in die Gewindekontur des aufgeschraubten Halsstückes gepreßt wird. Von Vorteil dabei ist, daß nicht nur bei hohen Innendrücken, sondern auch bei niedrigem Fülldruck der kritische Endbereich des Liners unter Spannung anliegt. Die Größe der Vorspannung ist einstellbar durch mehr oder weniger tiefes Hineindrehen des Klemmringes. Die so erzeugte Vorspannung wirkt der thermischen Ausdehnung bzw. Kontraktion des Liners im Bezug auf das Halsstück entgegen. Um den Klemmring in einfacher Weise drehen zu können, weist dieser einen Innensechskant auf, so daß definierte Drehmomente aufgebracht und rechnerisch die erforderliche Flankenpressung des Klemmringes nachvollzogen werden können.

Je nach Art der Gasbefüllung und insbesondere der Füllzyklen hat sich die Anordnung eines modifizierten Klemmringes als vorteilhaft herausgestellt. Bei der täglichen Betankung mit Erdgas, wie sie bei Stadtomnibussen mit Erdgasantrieb üblich ist, werden, um den Betankungsvorgang kurz zu halten, große Füllmengen in kurzer Zeit in den Behälter gepreßt. Das führt infolge der Kompressionsenergie zu einer Erwärmung des Einfüllkanales. Um den empfindlichen Liner aus Kunststoff vor dieser Erwärmung zu schützen, schließt sich an den kegelstumpfartigen Abschnitt des Klemmringes ein zylindrischer Abschnitt an, der sich bis in den Behälterraum erstreckt. Auf diese Weise wird verhindert, daß im schmalen Einfüllkanal das erwärmte Gas unmittelbar mit dem Liner in Kontakt kommt somit und der mit dem Halsstück verbundene Kunststoff-Liner vor der thermischen Einwirkung geschützt wird. Nötigenfalls kann bei einem solchen Betankungsvorgang der Ventilanschluß von außen gekühlt werden.

Für Ventile mit einer vorgeschalteten keramischen Filterpatrone, wie sie beispielsweise für Atemluft vorgesehen ist, weist der Klemmring eine lichte Weite von mindestens 6 mm auf. Im Regelfall ist eine lichte Weite von 8 - 10 mm erforderlich, damit die manchmal krumme Filterpatrone ohne Schwierigkeiten eingeschraubt werden kann.

Ein weiterer Aspekt betrifft die Anordnung eines Dichtelementes im Halsbereich. Bei der bekannten Ausführung aus dem Stand der Technik ist das Dichtelement auf der Stirnseite des Endbereiches des Liners angeordnet. Eine Vielzahl von Versuchen und Untersuchungen haben aber gezeigt, daß die Toleranzpaarung zwischen Halsbereich des Liners und der des Halsstückes als kritisch anzusehen ist. Die Fertigung des Liners ist verfahrensbedingt nur mit einer großen Toleranz möglich, so daß im ungünstigsten Falle ein Spalt zwischen Liner und Halsstück zu überbrücken ist. Der einschraubbare Klemmring schafft zwar einen gewissen Ausgleich, andererseits sind der Einschraubkraft aber Grenzen gesetzt, anderenfalls würde der Halsbereich des Liners zerstört werden. Aus diesem Grunde wird vorgeschlagen, in den gewindefreien Abschnitt des Halsbereiches des Liners einen Dichtring anzuordnen, der in einer radial in das Halsstück sich erstreckenden Nut verankert ist. Für besonders kritische Fälle hat es sich als günstig herausgestellt, wenn zusätzlich auf der Unterseite des Kragens des Halsstückes ein weiterer Dichtring angeordnet wird. Dies hat den Vorteil, daß bei sich überlagernder thermischer und mechanischer Beanspruchung insbesondere Schlagbeanspruchung in axialer Richtung einer möglichen Leckage durch Lockerung des Verbundes zwischen Liner und Halsstück im Kragenbereich durch den Dichtring entgegengewirkt werden kann. Um die Anbindung zwischen Halsstück und Kunststoff-Liner weiter zu verbessern, wird außerdem vorgeschlagen, zwischen Unterseite des Kragens des Halsstückes und dem damit kontaktierenden Bereich des Liners die Anordnung eines Klebemittels vorzusehen.

Im Hinblick auf die Schlagbeanspruchung hat sich die Anordnung einer Außensicke im anschließenden Bereich an den Kragen als vorteilhaft herausgestellt. Diese Sicke sorgt dafür, daß ein Großteil der auf das Halsstück auftreffenden Schlagbeanspruchung in die Wicklung geleitet wird und nur noch ein Rest über den Kragen auf den Linerbereich trifft. Anderenfalls ist es möglich, daß durch das schlagende Halsstück der Linerbereich so stark beansprucht wird, daß er lokal aufreist. Im gleichen Sinne wirkt auch die Anordnung einer schlagabsorbierenden Schicht auf beide Polkappen des Druckbehälters. Vorzugsweise wird dazu ein schnell aushärtender Polyurethanschaum verwendet. Dieser kann auch dazu genutzt werden, um in der dem Ventil gegenüberliegenden Polkappe eine Abstellfläche auszuformen, so daß der Behälter ohne Hilfsmittel senkrecht gestellt werden kann. Diese Abstellfläche kann als flache Scheibe oder als Fußring ausgebildet sein.

Je nach Anwendungsfall kann es erforderlich sein, ein Ventil mit einem genormten Kegelgewinde einzuschrauben. Um weiterhin den Klemmring einschrauben zu können, wird der obere Innengewindeabschnitt in zwei Abschnitte unterteilt. Der erste Abschnitt ist ein zylindrisches Feingewinde zur Aufnahme des Klemmringes, daran schließt sich mit einem Absatz das genormte Kegelgewinde zur Aufnahme des Ventils an.

Insgesamt haben die vorgeschlagenen Maßnahmen dazu geführt, daß der weiterentwickelte Druckbehälter mit einem Prüfdruck bis zu 450 bar die Zulassungsbedingungen erfüllt und wahlweise für die verschiedensten Gase, sei es Atemluft, Erdgas, Wasserstoff o. a. zur Befüllung eingesetzt werden kann.

In der Zeichnung wird anhand eines Ausführungsbeispieles der erfindungsgemäß ausgebildete Composite-Druckbehälter näher erläutert. Es zeigen:
- Figur 1: im Längsschnitt einen erfindungsgemäß ausgebildeten Composite-Druckbehälter
- Figur 2: im Teillängsschnitt den Liner (Ventilbereich)
- Figur 3: im Teillängsschnitt den Liner (Bodenbereich)
- Figur 4: im vergrößerten Maßstab im Längsschnitt den Ventilbereich im gewickelten Zustand
- Figur 5: im halbseitigen Längsschnitt und in halbseitiger Ansicht das Ventil-Halsstück
- Figur 6: im halbseitigen Längsschnitt und in halbseitiger Ansicht das Boden-Halsstück
- Figur 7: im halbseitigen Längsschnitt eine Variante des Ventil-Halsstückes
- Figur 8: im Längsschnitt eine Ausführungsform eines Klemmringes
- Figur 9: wie Figur 8, jedoch eine Variante eines Klemmringes

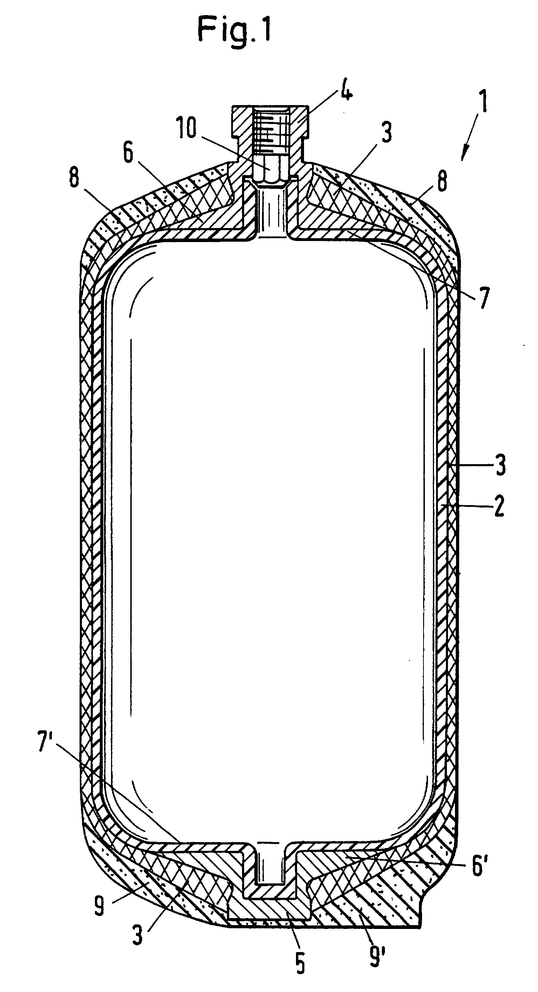

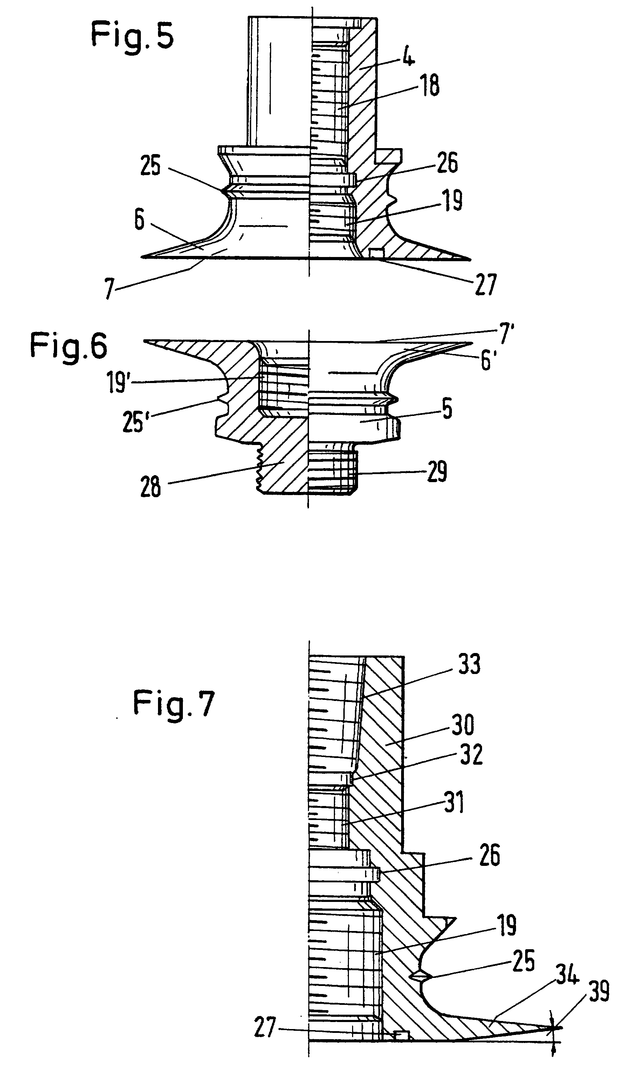

In Figur 1 ist in einem Längsschnitt ein erfindungsgemäß ausgebildeter Composite-Druckbehälter 1 dargestellt. Er besteht aus einem über Blasformen oder Rotations-Sinter-Verfahren oder Thermoformverfahren hergestellten Kunststoff-Liner 2, der durch eine von außen aufgewickelte Faserwicklung 3 verstärkt wird. Beispielsweise besteht die verstärkende Umwicklung aus einer Faserverstärkung wie z. B. Kohlenstoff-, Aramid-, Glas-, Bor-, Al₂O₃ -Fasern oder Gemischen (Hybridgame) hieraus, die in einer Matrix aus Duromeren, z. B. Epoxid- oder Phenolharzen etc. oder in Thermoplasten, z. B. PA 12, PA6, PP etc. eingebettet sind. Der Faserverbundwerkstoff, bestehend aus o. g. Fasern und Polymeren, wird sowohl in axialer als auch tangentialer Richtung des Behälters aufgebracht, d. h. der Faserverstärkungskörper (FVK) bzw. die Ausrichtung der Faserlängsachsen weisen im Fall der axialen Umwicklung im zylindrischen Behälterteil nur einen kleinen Winkel (0 - 70°) gegenüber der Behälterlängsachse auf. Mit Hilfe der axialen Bewicklung werden auch die Polkappen des Kunststoff-Liners 2 gleichmäßig bewickelt. Vorher, alternierend oder nach dieser Polkappenwicklung erfolgt die Ablage des Faserverstärkungskörpers ausschließlich tangential bzw. in Umfangsrichtung des zylindrischen Behälterteils. Die Wanddickenanteile von tangentialer Umwicklung und axialer Umwicklung hängen ab vom Außendurchmesser des Kunststoff-Liners 2, von der Festigkeit des Faserverstärkungskörpers, von den Wickelwinkeln etc. Der Composite-Druckbehälter 1 weist im Halsbereich Öffnungen auf, die je mit einem Halsstück 4, 5 verschlossen und / oder abgedichtet sind. Einzelheiten der Halsstücke 4, 5 werden in den Figuren 5 - 7 näher erläutert. Beide Halsstücke 4, 5 weisen in bekannter Weise einen kegelstumpfartig ausgebildeten Kragen 6, 6' auf, an dessen Unterseite 7, 7' der Liner 2 zur Anlage kommt. Beide Polkappen des Composite-Druckbehälters 1 sind erfindungsgemäß mit einer schlagabsorbierenden Schicht 8, 9, 9' bedeckt. Vorzugsweise besteht diese Schicht 8, 9, 9' aus Polyurethan-Schaum. In vorteilhafter Weise kann die dem Ventilbereich gegenüberliegende Polkappe als Abstellfläche 9' ausgebildet sein, wie hier auf der rechten Bildseite unten zu erkennen ist. Diese Abstellfläche 9' kann, wie hier dargestellt, als flache Scheibe oder als Fußring ausgebildet sein.

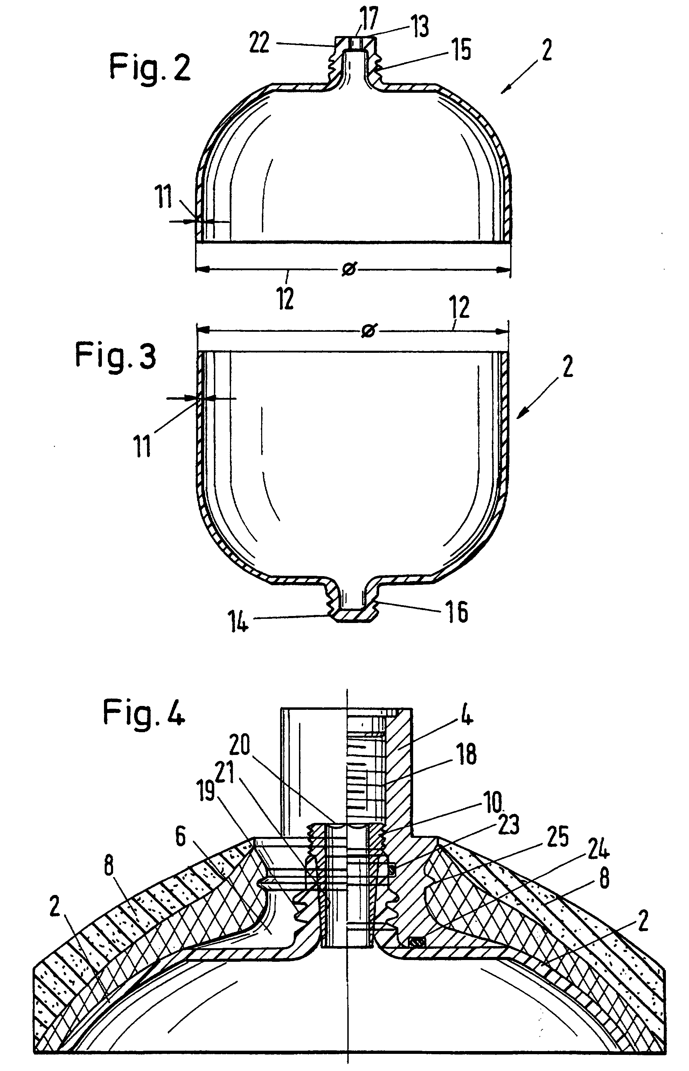

Zur Verbesserung der Abdichtung im Halsbereich ist in dem das Ventil (hier nicht dargestellt) aufnehmende Halsstück 4 ein Klemmring 10 eingeschraubt. Einzelheiten dazu sind in Figur 4 dargestellt.

Figur 2 und 3 zeigen im Teillängsschnitt den Kunststoff-Liner 2. Seine Maße sind im wesentlichen durch die Dicke 11 und den äußeren Durchmesser 12 bestimmt. In bekannter Weise ist der Liner 2 in den Endbereichen als Hals 13, 14 ausgebildet. Zum Aufschrauben der Halsstücke 4, 5 ist der jeweilige Hals 13, 14 des Liners 2 mit einem Gewindeabschnitt 15, 16 versehen. Vorzugsweise ist das Gewinde 15,16 als Sägezahngewinde ausgebildet, z. B. KS 25 Steigung 4 gemäß DIN 6063 Teil 1 und Teil 2. Zu erwähnen ist noch, daß der das Ventil aufnehmende Hals 13 mit einer Bohrung 17 versehen ist, während der gegenüberliegende Hals 14 geschlossen ist und somit keine Abdichtprobleme aufwirft.

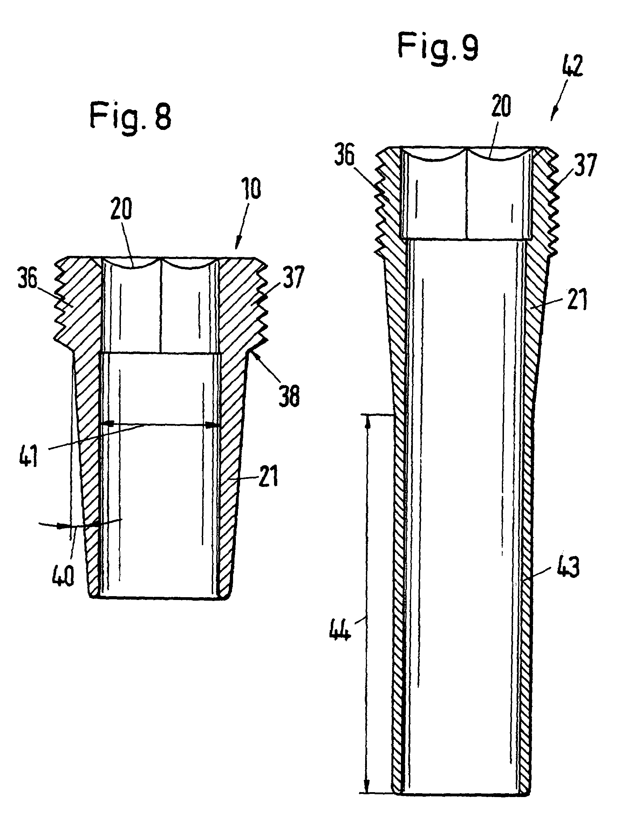

Figur 4 zeigt in einem vergrößerten Maßstab den Halsbereich des Composite-Druckbehälters 1 auf der Ventilseite. In dieser Darstellung sind die Einzelheiten des Anschlusses besser zu erkennen. Das das Ventil aufnehmende Halsstück 4 ist innenseitig mit zwei Gewindeabschnitten 18, 19 versehen, wovon der oben liegende Gewindeabschnitt 18 in diesem Ausführungsbeispiel als zylindrisches Gewinde ausgebildet ist, zur Aufnahme des Klemmringes 10 und zur Aufnahme des hier nicht dargestellten Ventils. Der darunter liegende Gewindeabschnitt 19 ist das Gegenstück zum Außengewinde 15 des Halses 13 des Liners 2. Durch das Hineindrehen des Klemmringes 10 mittels des Innensechskants 20 (siehe Figur 8 bzw. 9) wird über den kegelstumpfförmig ausgebildeten Abschnitt 21 der Hals 13 des Liners 2 in die Gewindekontur 19 des Halsstückes 4 gepreßt. Als weitere Abdichtmaßnahme ist im gewindefreien Abschnitt 22 (Figur 2) des Halses 13 ein Dichtring 23 angeordnet. Falls erforderlich, kann zusätzlich auch auf der Unterseite 7 des Kragens 6 ein weiterer Dichtring 24 angeordnet werden. Zur Verbesserung der Belastbarkeit bei Schlagbeanspruchung ist auf der Außenseite des Halsstückes 4 die Anordnung einer umlaufenden Sicke 25 vorgesehen.

Die Figuren 5, 6 zeigen in einem halbseitigen Längsschnitt und einer halbseitigen Ansicht die beiden Halsstücke 4, 5. Zur Aufnahme der beiden in der zuvor erläuterten Figur 4 erwähnten Dichtringe 23, 24 sind im Halsstück 4 entsprechende Nuten 26, 27 vorgesehen. Die erstgenannte Nut 26 ist zwischen den beiden Innengewindeabschnitten 18, 19 angeordnet, die zweitgenannte Nut 27 auf der Unterseite 7 des Kragens 6. Das dem Ventil gegenüberliegende Halsstück 5 ist vergleichbar aufgebaut. Es weist ebenfalls einen Innengewindeabschnitt 25' auf zum Aufschrauben auf den Hals 14 des Liners 2 (Figur 3). Es ist vorzugsweise ebenfalls als Sägezahngewinde ausgebildet. Auf der Außenfläche des Halsstückes 5 ist ebenfalls eine umlaufende Sicke 25' vorgesehehn, um die Schlagbeanspruchung zu dämpfen.

Im Anlieferungszustand weist das untenliegende Halsstück 5 noch einen Zapfen 28 auf, der mit einem Außengewinde 29 versehen ist. Der Zapfen 28 dient als Aufnahme einer Haltevorrichtung bei der Aufbringung des Faserverbundwerkstoffes auf den Liner 2. Wie Figur 1 zeigt, wird dieser Zapfen 28 nach Aufbringung der Faserwicklung abgetrennt, bevor die schlagabsorbierende Schicht 9, 9' aufgebracht wird.

In Figur 7 ist eine Variante eines das Ventil aufnehmenden Halsstückes 30 dargestellt. Im Unterschied zu dem in Figur 5 dargestellten Halsstück 4 ist der obenliegende Innengewindeabschnitt in zwei Abschnitte unterteilt. Der erste Abschnitt 31 ist wie der Abschnitt 18 in Figur 5 mit einem zylindrischen Gewinde zur Aufnahme des Klemmringes 10 versehen. Daran schließt sich mit einem Absatz 32 ein genormter kegeliger Gewindeabschnitt 33 an. Diese Variante ist erforderlich, da je nach Gasbefüllung und Lieferant auch Ventile mit kegeligem Einschraubgewinde vorgeschrieben sein können. Ein weiterer Unterschied betrifft die Ausbildung des Kragens 34. Im Unterschied zu der Ausbildung in Figur 5 und 6 ist der Kragen 34 des Halsstückes 30 schräg nach oben gerichtet. Je nach Boden- bzw. Schulterform des Liners 2 werden durch diese Abschrägung günstigere Spannungsverhältnisse im Bauteil erreicht. Vorzugsweise liegt der Winkel dieser Schräge in einem Bereich von 5 - 10°.

Figur 8 zeigt im Längsschnitt eine erste Ausführungsform eines Klemmringes 10. Er weist einen zylindrischen Abschnitt 36 mit einem Außengewinde 37 zum Eindrehen in das jeweilige Halsstück 4, 30 auf. Daran schließt sich mit einer Abrundung 38 ein kegelstumpfartig ausgebildeter Abschnitt 21 an. Der Winkel 40 liegt im Bereich zwischen 3 - 5°. Wichtig ist auch die lichte Weite 41 des Klemmringes 10. Diese darf nicht zu klein gewählt werden, damit beispielsweise ein für Atemluft vorgeschriebenes Ventil mit einer vorgeschalteten Filterpatrone einschraubbar ist. Das Maß sollte 6 mm nicht unterschreiten, zweckmäßig sind 8 mm, um auch krumme Filterpatronen ohne Probleme einschrauben zu können.

Figur 9 zeigt eine Variante 42 der Ausgestaltung des Klemmringes, wobei für gleiche Teile gleiche Bezugszeichen gewählt worden sind. An den schon erwähnten kegelstumpfartig ausgebildeten Abschnitt 21 schließt sich ein zylindrischer Abschnitt 43 an, der zweckmäßigerweise als Rohr ausgebildet ist. Die Länge 44 dieses Abschnittes 43 wird so gewählt, daß nach dem Einschrauben der vordere Bereich des Klemmringes 42 in den Behälterraum hineinragt. Dies wirkt sich vorteilhaft aus, wenn die Befüllung mit einer starken Erwärmung verbunden ist und der Liner 2 davor geschützt werden soll.

## Patentansprüche

1. Composite-Druckbehälter zur Speicherung von gasförmigen Medien unter Druck mit einem Liner (2) aus Kunststoff und zwei im Halsbereich angeordneten Halsstücken (4, 5) sowie mit einer den Liner verstärkenden Wicklung eines Faserverbundwerkstoffes (3), von denen mindestens eines zur Aufnahme eines einschraubbaren, ein Gewinde aufweisenden Ventils ausgebildet ist und beide Halsstücke (4, 5) in dem dem Druckbehälter zugewandten Endbereich mit einem flach verlaufenden kegelstumpfartigen Kragen (6, 6') versehen sind, der innenseitig vom Liner (2) und außenseitig von der verstärkenden Wicklung (3) umgeben ist und das Halsstück (4, 5) in dem dem Liner (2) zugewandten Bereich einen Innengewindeabschnitt (19, 19') aufweist, der mit einem auf dem als Hals ausgebildeten Bereich des Liners angeordneten Außengewindeabschnitt (15, 16) zusammenwirkt und das ein Ventil aufnehmende Halsstück (4) an den den Innengewindeabschnitt (19) anschließenden gewindefreien Bereich auf der Innenseite eine ringförmige Nut (26) zur Aufnahme eines Dichtelementes (23) aufweist und darin sich ein weiterer Innengewindeabschnitt (18) zur Aufnahme des Ventils anschließt und zur Drehsicherung das das Ventil aufnehmende Halsstück (4) außen mit einem Schlüsselansatz versehen ist,
**dadurch gekennzeichnet,**
**daß** im das Ventil aufnehmende Halsstück (4,30) ein in diesen einschraubbarer Klemmring (10,42) vorgesehen ist, der am Außenmantel einen Gewindeabschnitt (37) aufweist, an dem sich ein gewindefreier kegelstumpfartiger Abschnitt (21) anschließt und die zwischen den Innengewindeabschnitten (18,19,31) des Hatsstückes (4,30) angeordnete ringförmige Nut (26) zur Aufnahme eines Dichtringes (23) radial in das Halsstück (4,30) sich erstreckt und auf der Außenseite des jeweiligen Halsstückes (4,5,30) im an den Kragen (6,6',34) anschließenden Bereich die Anordnung mindestens einer radial nach außen über den ganzen Umfang sich erstreckenden Sicke (25,25') vorgesehen ist.

2. Composite-Druckbehälter nach Anspruch 1,
**dadurch gekennzeichnet,**
**daß** die Polkappen des Druckbehälters (1) mit einer schlagabsorbierenden Schicht (8,9,9') versehen sind.

3. Composite-Druckbehälter nach Anspruch 1 und 2,
**dadurch gekennzeichnet,**
**daß** die dem Ventil gegenüberliegende Polkappe als Aufstellfläche (9') ausgebildet ist.

4. Composite-Druckbehälter nach Anspruch 2 und 3,
**dadurch gekennzeichnet,**
**daß** die schlagabsorbierende Schicht (8,9,9') aus Polyurethan-Schaum besteht.

5. Composite-Druckbehälter nach den Ansprüchen 1 - 4,
**dadurch gekennzeichnet,**
**daß** der kegelstumpfartige Abschnitt (21) des Klemmringes (10,42) mit dem Hals (13) des Liners (2) zusammenwirkt, der eine korrespondierende auf der Innenseite des Liners (2) angeordnete Schräge aufweist.

6. Composite-Druckbehälter nach einem der Ansprüche 1 - 5,
**dadurch gekennzeichnet,**
**daß** der Klemmring (10,42) einen Innensechskant (20) aufweist und das Gewinde (37) als Feingewinde ausgebildet ist.

7. Composite-Druckbehälter nach einem der Ansprüche 1 - 6,
**dadurch gekennzeichnet,**
**daß** sich an den kegelstumpfartigen Abschnitt (21) des Klemmringes (42) ein sich in den Behälterraum hinein erstreckender zylindrischer Abschnitt (43) anschließt.

8. Composite-Druckbehälter nach einem der Ansprüche 1 - 7,
**dadurch gekennzeichnet,**
**daß** für Anordnung eines Ventils mit vorgeschalteter Filterpatrone der Klemmring (10) eine lichte Weite (41) von mindestens 6 mm aufweist.

9. Composite-Druckbehälter nach einem der Ansprüche 1 - 8,
**dadurch gekennzeichnet,**
**daß** der kegelstumpfartige Abschnitt (21) des Klemmringes (10,42) einen Winkel im Bereich von 3 - 5° aufweist.

10. Composite-Druckbehälter nach einem der Ansprüche 1 - 9,
**dadurch gekennzeichnet,**
**daß** das das Ventil aufnehmende Halsstück (4,30) auf der Unterseite des Kragens (6,34) mit einer ringförmigen Nut (27) zur Aufnahme eines Dichtringes (24) versehen ist.

11. Composite-Druckbehälter nach einem der Ansprüche 1 - 10,
**dadurch gekennzeichnet,**
**daß** der Randbereich des Kragens (34) schräg nach oben gerichtet ist.

12. Composite-Druckbehälter nach Anspruch 11,
**dadurch gekennzeichnet,**
**daß** der Winkel (39) für die Schräge in einem Bereich von 5 - 10° liegt.

13. Composite-Druckbehälter nach einem der Ansprüche 1 - 12,
**dadurch gekennzeichnet,**
**daß** das Außengewinde (15,16) des Halses (13,14) des Liners (2) und das damit zusammenwirkende Innengewinde (19) des Halsstückes (4,30) als Sägezahngewinde ausgebildet ist.

14. Composite-Druckbehälter nach einem der Ansprüche 1 - 13,
**dadurch gekennzeichnet,**
**daß** der das Ventil aufnehmende Innengewindeabschnitt des Halsstückes (30) unterteilt ist in einen ein zylindrisches Feingewinde aufweisenden Abschnitt(31) zur Aufnahme des Klemmringes (10,42) und ein davon abgesetzes ein kegeliges Gewinde aufweisenden Abschnitt (33) zur Aufnahme des Ventils.

15. Composlte-Druckbehälter nach einem der Ansprüche 1 - 14,
**dadurch gekennzeichnet,**
**daß** zwischen Unterseite (7) des Kragens (6,6') des Halsstückes (4,5,30) und dem damit kontaktierenden Bereich des Liners (2) die Anordnung eines Klebemittels vorgesehen ist.

## Claims

1. Composite pressure vessel for storing gaseous media under pressure, having a liner (2) made of plastic and two neck pieces (4, 5) in the neck area, and having a wrapper (3) made of a fibre-reinforced material to strengthen the liner; at least one of the neck pieces is made to accept a screwed-in valve with a screw thread, and both neck pieces (4, 5) have, in the end areas facing towards the pressure vessel, a flat-based, tapered collar (6, 6'), which is enclosed on the inside by the liner (2) and on the outside by the reinforcing wrapper (3); and the neck piece (4, 5) in the area facing towards the liner (2) has an internally threaded section (19, 19') which operates in conjunction with an externally threaded section (15, 16) of the liner on the area which is shaped to form a neck; and the neck piece (4) holding a valve has, in a non-threaded area adjoining the internally threaded area (19), a ring-shaped groove (26) inside for the purpose of holding a sealing element (23); and into this neck piece connects another internally threaded section (18) to hold the valve; and the neck piece (4) that holds the valve is fitted with a key attachment on the outside for the purpose of twist-locking it;
**characterised in that**
in the neck piece (4, 30) that holds the valve there is a locking ring (10, 42) which is screwed into it and which has, on its outer casing, a threaded section (37) on to which adjoins a non-threaded tapered section (21); and the ring-shaped groove (26) between the internally threaded sections (18, 19, 31) of the neck piece (4, 30) extends radially into the neck piece (4, 30) to hold a sealing ring (23); and there is, on the outside of the appropriate neck piece (4, 5, 30) in the area adjoining the collar (6, 6', 34), at least one bead (25, 25') extending radially outwards over the whole circumference.

2. Composite pressure vessel as in Claim 1,
**characterised in that**
the polar caps of the pressure vessel (1) have an impact-absorbing layer (8, 9, 9').

3. Composite pressure vessel as in Claims 1 and 2,
**characterised in that**
the polar cap opposite the valve is made to form a stable base (9').

4. Composite pressure vessel as in Claims 2 and 3,
**characterised in that**
the impact-absorbing layer (8, 9, 9') is made of polyurethane foam.

5. Composite pressure vessel as in Claims 1 - 4,
**characterised in that**
the tapered section (21) of the locking ring (10, 42) operates in conjunction with the neck (13) of the liner (2), which has a corresponding bevel on the inside of the liner (2).

6. Composite pressure vessel as in one of Claims 1 - 5,
**characterised in that**
the locking ring (10, 42) has a hexagonal socket (20), and the thread (37) is in the form of a fine-pitch thread.

7. Composite pressure vessel as in one of Claims 1 - 6,
**characterised in that**
a cylindrical section (43), which extends into the vessel chamber, adjoins the tapered section (21) of the locking ring (42).

8. Composite pressure vessel as in one of Claims 1 - 7,
**characterised in that**
the locking ring (10) has an internal width (41) of at least 6 mm to hold a valve with a superposed filter cartridge.

9. Composite pressure vessel as in one of Claims 1 - 8,
**characterised in that**
the tapered section (21) of the locking ring (10, 42) has an angle of 3 - 5 °.

10. Composite pressure vessel as in one of Claims 1 - 9,
**characterised in that**
the neck piece (4, 30) that holds the valve has, on the underside of the collar (6, 34), a ring-shaped groove (27) to hold a sealing ring (24).

11. Composite pressure vessel as in one of Claims 1 - 10,
**characterised in that**
the edge area of the collar (34) slopes upwards.

12. Composite pressure vessel as in Claim 11,
**characterised in that**
the angle (39) of the slope is between 5 ° and 10 °.

13. Composite pressure vessel as in one of Claims 1 - 12,
**characterised in that**
the external thread (15, 16) of the neck (13, 14) of the liner (2), and its corresponding internal thread (19) of the neck piece (4, 30), are in the form of a buttress thread.

14. Composite pressure vessel as in one of Claims 1 - 13,
**characterised in that**
the intemally threaded section of the neck piece (30), which holds the valve, is divided into a section (31) with a cylindrical fine-pitch thread to hold the locking ring (10, 42) and a section (33), stepped in relation to this, which has a tapered thread to hold the valve.

15. Composite pressure vessel as in one of Claims 1 - 14,
**characterised in that**
provision is made for the application of an adhesive between the underside (7) of the collar (6,6') of the neck piece (4, 5, 30) and the part of the liner (2) that is in contact with it.

## Revendications

1. Récipient sous pression composite pour stocker des milieux gazeux sous pression, ayant un revêtement (2) de matière synthétique et deux parties de col (4, 5) agencées dans la zone de col, ainsi qu'un enroulement, renforçant le revêtement, d'une matière composite à fibres (3), desquelles au moins l'une est réalisée pour recevoir une valve présentant un filetage, pouvant être vissée, et les deux parties de col (4, 5) étant munies, dans la zone d'extrémité en regard du récipient sous pression, d'un collet (6, 6') tronconique s'étendant à plat, qui est entouré, du côté interne, par le revêtement (2) et, du côté externe, par l'enroulement de renforcement (3), et la partie de col (4, 5) présente, dans la zone en regard du revêtement (2), un tronçon à filetage interne (19, 19'), qui coopère avec un tronçon à filetage externe (15, 16) agencé sur la zone du revêtement réalisée comme col, et la partie de col (4) recevant une valve présente, au niveau de la zone sans filetage se raccordant au tronçon à filetage interne (19), sur la face interne, une gorge annulaire (26) pour recevoir un élément d'étanchéité (23) et un autre tronçon à filetage interne (18) pour recevoir la valve s'y raccorde et, pour la sécurité en rotation, la partie de col (4) recevant la valve est munie extérieurement d'une pièce rapportée formant clef,
**caractérisé en ce que**, dans la partie de col (4, 30) recevant la valve, il est prévu une bague de serrage (10, 42) pouvant être vissée dans celle-ci, laquelle présente, sur l'enveloppe externe, un tronçon fileté (37), auquel se raccorde un tronçon tronconique sans filetage (21) et la gorge annulaire (26) agencée entre les tronçons à filetage interne (18, 19, 31) de la partie de col (4, 30) s'étend radialement dans la partie de col (4, 30) pour recevoir une bague d'étanchéité (23) et, sur la face externe de la partie de col respective (4, 5, 30) dans la zone se raccordant au collet (6, 6', 34), il est prévu l'agencement d'au moins une moulure (25, 25') s'étendant radialement vers l'extérieur sur toute la périphérie.

2. Récipient sous pression composite selon la revendication 1,
**caractérisé en ce que** les coiffes polaires du récipient sous pression (1) sont munies d'une couche (8, 9, 9') absorbant les chocs.

3. Récipient sous pression composite selon les revendications 1 et 2,
**caractérisé en ce que** la coiffe polaire opposée à la valve est réalisée comme surface de pose (9').

4. Récipient sous pression composite selon les revendications 2 et 3,
**caractérisé en ce que** la couche (8, 9, 9') absorbant les chocs est constituée d'une mousse de polyuréthane.

5. Récipient sous pression composite selon les revendications 1 - 4,
**caractérisé en ce que** le tronçon tronconique (21) de la bague de serrage (10, 42) coopère avec le col (13) du revêtement (2), qui présente une inclinaison correspondante prévue sur la face interne du revêtement (2).

6. Récipient sous pression composite selon une des revendications 1 - 5,
**caractérisé en ce que** la bague de serrage (10, 42) présente un six pans creux (20) et le filetage (37) est réalisé comme filetage à pas fin.

7. Récipient sous pression composite selon une des revendications 1 - 6,
**caractérisé en ce qu'**un tronçon cylindrique (43) s'étendant dans l'espace du récipient se raccorde au tronçon tronconique (21) de la bague de serrage (42).

8. Récipient sous pression composite selon une des revendications 1 - 7,
**caractérisé en ce que**, pour l'agencement d'une valve avec une cartouche de filtre prévue en amont, la bague de serrage (10) présente une largeur intérieure (41) d'au moins 6 mm.

9. Récipient sous pression composite selon une des revendications 1 - 8,
**caractérisé en ce que** le tronçon tronconique (21) de la bague de serrage (10, 42) présente un angle dans la plage de 3 - 5°.

10. Récipient sous pression composite selon une des revendications 1 - 9,
**caractérisé en ce que** la partie de col (4, 30) recevant la valve est munie, sur le dessous du collet (6, 34), d'une gorge annulaire (27) pour recevoir une bague d'étanchéité (24).

11. Récipient sous pression composite selon une des revendications 1 - 10,
**caractérisé en ce que** la zone marginale du collet (34) est orientée de façon inclinée vers le haut.

12. Récipient sous pression composite selon la revendication 11,
**caractérisé en ce que** l'angle (39) d'inclinaison se trouve dans une plage de 5 - 10°.

13. Récipient sous pression composite selon une des revendications 1 - 12,
**caractérisé en ce que** le filetage externe (15, 16) du col (13, 14) du revêtement (2) et le filetage interne (19), coopérant avec celui-ci, de la partie de col (4, 30) sont réalisés comme filetage en dents de scie.

14. Récipient sous pression composite selon une des revendications 1 - 13,
**caractérisé en ce que** le tronçon à filetage interne, recevant la valve, de la partie de col (30) est subdivisé en un tronçon (31) présentant un filetage à pas fin cylindrique pour recevoir la bague de serrage (10, 42) et un tronçon (33) présentant un filetage conique décalé de celui-ci pour recevoir la valve.

15. Récipient sous pression composite selon une des revendications 1 - 14,
**caractérisé en ce que**, entre le dessous (7) du collet (6, 6') de la partie de col (4, 5, 30) et la zone, en contact avec celui-ci, du revêtement (2), il est prévu l'agencement d'un adhésif.
